# EUROPÄISCHE PATENTSCHRIFT

(11) **EP 2 281 404 B1**
(45) Veröffentlichungstag und Bekanntmachung des Hinweises auf die Patenterteilung: **11.04.2018**
(21) Anmeldenummer: 09761351.7
(22) Anmeldetag: 20.04.2009
(51) Int. Cl.: H04W 12/06, H04L 29/06, H04W 8/26, H04W 8/20

(54) **PERSONALISIERUNG EINER SIM MITTELS EINER EINDEUTIGEN, PERSONALISIERTEN MASTERSIM**
PERSONALIZING A FIRST SIM USING A UNIQUE PERSONALIZED MASTER SIM
PERSONALISATION D'UNE SIM AU MOYEN D'UNE SIM MAÏTRE PERSONALISÉE UNIQUE

(30) Priorität: 29.05.2008 DE 102008025792
(43) Veröffentlichungstag der Anmeldung: 09.02.2011
(73) Patentinhaber: Deutsche Telekom AG, 53113 Bonn (DE)
(72) Erfinder: NEUMANN, Peter, 81379 München (DE); PAGANO, Giulio, Leopoldo, A-1170 Wien (AT)
(74) Vertreter: Cohausz Hannig Borkowski Wißgott
(86) Internationale Anmeldenummer: PCT/EP2009/002862
(87) Internationale Veröffentlichungsnummer: WO 2009/149788

(56) Entgegenhaltungen:
- EP-A1- 1 257 106
- EP-A1- 1 689 199
- US-A1- 2008 003 982

## Beschreibung

Die Erfindung betrifft ein Verfahren zur Inbetriebnahme und Personalisierung eines weiteren zweiten, nicht personalisierten Identifizierungsmoduls, insbesondere SIM (Subscriber Identity Module) für den Betrieb eines Mobilfunkendgerätes, wobei ein erstes Identifizierungsmodul MasterSIM enthaltend einen personalisierten Datensatz, vorliegt.

Chipkarten werden insbesondere in der Mobilfunktelekommunikation wie insbesondere in den zellularen Mobilfunknetzen nach dem GSM oder dem UMTS Standard zur eindeutigen und sicheren Identifizierung der Teilnehmer, wie auch zur Bereitstellung verschiedener Sonderfunktionen und Mehrwertdienste eingesetzt. Die je nach Generation und Art des zugrunde liegenden Systemstandards UICC, SIM, USIM, R-UIM oder auch ISIM bezeichneten Chipkarten oder Chipkartenapplikationen, tragen dazu eine Vielzahl spezieller Parameter, geheime Schlüssel und weitere Elemente unterschiedlichster Art, z. B. mit Betreiberdaten, Anbieterdaten, Produktdaten oder Teilnehmerdaten. Zusammenfassend werden diese Chipkarten und Chipkartenapplikationen als Teilnehmeridentifizierungsmodul oder als SIM (Subscriber Identity Module) bezeichnet.

Weitere Einsatzgebiete von Chipkarten sind Kreditkarten, Kontokarten oder sonstige Identifizierungsmodule, insbesondere solche mit integrierten Speicherchips, auf denen auslesbar ein individueller, personalisierter Datensatz abgespeichert ist. Sofern nachfolgend von einem Teilnehmerdatensatz, Teilnehmeridentifizierungsmodul oder dergleichen die Rede ist, ist jeweils allgemein Datensatz bzw. Identifizierungsmodul oder dergleichen ohne Beschränkung auf eine Anwendung der Erfindung auf das Gebiet der Mobilfunktechnik gemeint. Das Gebiet der Mobilfunktechnik und insbesondere die Anwendung der Erfindung zur Personalisierung von Teilnehmeridentifizierungsmodulen von Mobilfunkteilnehmern zum Betrieb von Mobilfunkendgeräten ist lediglich ein bevorzugtes Anwendungsgebiet, auf dem die Erfindung in besonders vorteilhafter Weise einsetzbar ist. Die Erfindung ist jedoch nicht auf dieses Gebiet beschränkt.

Zur Inbetriebnahme eines mobilen Endgerätes und Teilnahme am Mobilfunkdienst ist ein Teilnehmeridentifizierungsmodul SIM (Abkürzung für die übliche englische Bezeichnung "Subscriber Identity Module") mit einem Teilnehmerdatensatz auszurüsten, der insbesondere die Teilnehmeridentifikation (IMSI) aufweist. Heutzutage sind derartige Teilnehmeridentifizierungsmodule SIM seitens des Mobilfunknetzbetreibers mit den entsprechenden Daten im Vorfeld ausgerüstet worden um den Benutzer bei der Nutzung der Dienste eines Mobilfunknetzes identifizieren zu können. Eine nicht personalisierte SIM ist nicht geeignet für die Benutzung in einem Mobilfunkendgerät, d.h. dass die Nutzung der Dienste eines Mobilfunknetzes mit einer nicht personalisierten SIM nicht möglich ist. Die spezifischen Daten, die einerseits für die Nutzung der Dienste und andererseits für die Abrechnung der genutzten Dienste erforderlich sind, müssen den Benutzer des Mobilfunknetzes eindeutig identifizieren, um einem Missbrauch vorzubeugen.

Nachteilig ist dabei, dass für die Nutzung einer Mehrzahl von Geräten eine steigende Anzahl von SIM Karten erforderlich ist. Es müssen somit eine Mehrzahl von SIM Karten einem Benutzer zugeordnet werden oder der Benutzer muss die SIM Karte zum Betrieb verschiedener Mobilfunkendgeräte jeweils zwischen den Geräten tauschen, was sehr aufwendig und unbequem ist.

Derzeit ist es so, dass lediglich seitens des Mobilfunknetzbetreibers neue SIM Karten ausgegeben werden können, was einen hohen Aufwand und Kosten nach sich zieht. Auch auf anderen Gebieten ist die Ausgabe neuer Chipkarten dem jeweiligen Systembetreiber vorbehalten.

Die europäische Patentanmeldung EP 1257106 A1 beschreibt ein Verfahren zur Zugangsgewährung für ein Client-Endgerät zu einem Teilnehmermodul eines Server-Kommunikationsendgeräts, bei dem zunächst eine Verbindung zwischen dem Client-Endgerät und den Server-Kommunikationsendgeräts erstellt wird, anschließend über diese Verbindung Daten betreffend das Teilnehmermodul zwischen dem Server-Kommunikationsendgeräts und dem Client-End übertragen werden, das Client-Endgerät danach vom Teilnehmermodul authentifiziert wird, und schließlich in Abhängigkeit des Ergebnisses der Authentifizierung die Teilnehmermodul bezogenen Daten bereitgestellt werden.

In der europäischen Patentanmeldung EP 1 689 199 A1 wird beschrieben, wie sich verschiedene Endgeräte die Daten einer SIM-Karte teilen können, wobei jedes Endgerät eine eigene SIM-Karte besitzt, aber ein zweites Endgeräten eine integrierte - nicht entfernbare SIM-Karte (built-in) aufweist, und zu einem ersten Endgerät eine Nahfeld-Kommunikationsverbindung aufbaut, durch welche das erste Endgerät dann mittels der integrierten SIM-Karte des zweiten Endgerätes Zugriff auf das Mobilfunknetz erlangen kann.

Ferner ist aus der US-Anmeldung 2008/0003982 A1 bekannt, einem Client-Endgerät Zugang zu einem Identifizierungsmodul eines Server-Endgerätes zu gewähren, wobei zunächst eine Kommunikationsverbindung zwischen dem Client-Endgerät und dem Server-Endgerät eingerichtet wird, teilnehmerbezogene Daten des Identifizierungsmoduls von dem Server-Endgerät zu dem Client-Endgerät über die Kommunikationsverbindung übertragen werden, eine Authentifizierung des Client-Endgerätes durch das Identifizierungsmodul anhand einer schlüsselbasierten Authentifizierungsprozedur erfolgt und anhand des Ergebnisses dieser Prozedur die Übertragung des teilnehmerspezifischen Daten initiiert wird. Das Verfahren ermöglicht einem "Fernsteuerungsgerät" (remote device = client communications terminal) eine sichere Verwendung des Identifizierungsmoduls eines andren Gerätes, um Zugang zu wichtigen Informationen oder Funktionen zu erhalten, beispielsweise um sich mit einem zellularen Netzwerk zu verbinden. In dem Identifizierungsmodul gespeicherte Daten können dabei von dem Client-Endgerät zu dem Server-Endgerät übertragen werden, wobei das Identifizierungsmodul des Server-Endgerätes in der Lage ist, eine Vielzahl verschiedener Client-Endgeräte zu authentifizieren. Das Identifizierungsmodul authentifiziert somit keine anderen Identifizierungsmodule sondern vielmehr Endgeräte. Dabei werden die teilnehmerspezifischen Daten von

Die Aufgabe der Erfindung ist es, ein Verfahren zur Inbetriebnahme und Personalisierung eines Identifizierungsmoduls, insbesondere eines Teilnehmeridentifizierungsmoduls SIM für den Betrieb eines Mobilfunkendgerätes, bereitzustellen, das die Verwaltung, Herstellung und Benutzung von personalisierten Identifizierungsmodulen SIM vereinfacht.

Diese Aufgabe wird erfindungsgemäß durch ein Verfahren gemäß Anspruch 1 gelöst.

Vorteilhafte Weiterbildungen des erfindungsgemäßen Verfahrens sind in den Unteransprüchen angegeben.

Besonders vorteilhaft bei dem erfindungsgemäßen Verfahren zur Inbetriebnahme und Personalisierung eines weiteren zweiten nicht personalisierten Identifizierungsmoduls, insbesondere für den Betrieb eines Mobilfunkendgerätes, wobei ein erstes Identifizierungsmodul MasterSIM enthaltend einen personalisierten Datensatz vorliegt, ist es, dass eine Authentifizierung und/oder Überprüfung des zweiten Identifizierungsmoduls durchgeführt und der zur Personalisierung des zweiten Identifizierungsmoduls auf dem zweiten Identifizierungsmodul zu speichernde Datensatz, von dem ersten Identifizierungsmodul MasterSIM ausgelesen wird, zu dem zweiten Identifizierungsmodul übertragen und auf diesem zweiten Identifizierungsmodul gespeichert wird, insbesondere enthaltend eine oder mehrere eindeutige endgültige Teilnehmeridentifikation (IMSI).

Mit der Bezeichnung zweites Identifizierungsmodul ist dabei nicht nur ein zweites Identifizierungsmodul, insbesondere SIM, an sich, sondern jedes weitere Identifizierungsmodul gemeint, da mit dem erfindungsgemäßen Verfahren eine Mehrzahl, d.h. je nach Vorgabe eine beliebige Anzahl, weiterer Identifizierungsmodule personalisierbar ist.

Es ist somit lediglich noch erforderlich, einerseits eine personalisierte MasterSIM auszugeben, d.h. ein Identifizierungsmodul oder Teilnehmeridentifizierungsmodul enthaltend einen personalisierten Datensatz / Teilnehmerdatensatz, wobei dieses MasterSIM entsprechend ausgerüstet und geeignet ist Daten, d.h. den personalisierten Datensatz / Teilnehmerdatensatz zur Verfügung zu stellen, um mittels dieses Datensatzes / Teilnehmerdatensatzes eine weitere zweite, respektive beliebig viele weitere Identifizierungsmodule, insbesondere weitere so genannte SIM-Karten für den Betrieb weiterer Mobilfunkendgeräte zur Verfügung zu stellen. Es werden somit von dem MasterSIM quasi Kopien von SIMs insbesondre für den Betrieb von Mobilfunkendgeräten erzeugt, wobei MasterSIM und weitere SIM sich insbesondere dadurch unterscheiden können, dass es wiederum nicht möglich ist, von einer weiteren SIM eine weitere Kopie zu erstellen, sondern dass lediglich die MasterSIM hierzu geeignet ist. Dies kann dadurch gewährleistet werden, dass die MasterSIM mit einer speziellen Authentifizierungseignung oder Eigenschaft ausgerüstet wird.

Sofern im Rahmen dieser Beschreibung oder der Ansprüche von einem Teilnehmerdatensatz, Teilnehmeridentifizierungsmodul oder dergleichen die Rede ist, ist jeweils allgemein Datensatz bzw. Identifizierungsmodul oder dergleichen ohne Beschränkung auf eine Anwendung der Erfindung auf das Gebiet der Mobilfunktechnik gemeint. Mit der Bezeichnung SIM, die als Abkürzung des englischen Begriffs "Subscriber Identity Module" für Teilnehmeridentifizierungsmodul bekannt und üblich ist, erfolgt keine Beschränkung auf das Gebiet der Mobilkommunikation. Vielmehr soll mit der Abkürzung SIM respektive zusammen gesetzten Begriffen enthaltend die Abkürzung SIM jede Art von Identifikationsmodul umfasst sein, welches einen lesbaren oder auslesbaren individuellen Datensatz aufweist. Das Gebiet der Mobilfunktechnik und insbesondere die Anwendung der Erfindung zur Personalisierung von Teilnehmeridentifizierungsmodulen von Mobilfunkteilnehmern zum Betrieb von Mobilfunkendgeräten ist lediglich ein bevorzugtes Anwendungsgebiet, auf dem die Erfindung in besonders vorteilhafter Weise einsetzbar ist. Die Erfindung ist jedoch nicht auf dieses Gebiet beschränkt.

Diese MasterSIM kann dann als Vorlage für alle weiteren zukünftigen Authentifizierungen für weitere SIM Karten oder Mobilfunkendgeräte mit einer fest installierten SIM dienen, wobei der Benutzer mittels seiner MasterSIM selber in die Lage versetzt wird, die Personalisierung eines oder mehrerer weiterer Identifizierungsmodule oder Teilnehmeridentifizierungsmodule SIM durchzuführen.

Es besteht ferner die Möglichkeit, dass ein erstes Identifizierungsmodul MasterSIM (MSIM) mehrere Teilnehmeridentifikationen (IMSI) enthält und diese zur Inbetriebnahme und Personalisierung mehrerer nicht personalisierten Identifizierungsmodulen (VSIM) genutzt werden.

Vorzugsweise kann ein ursprünglich nicht personalisiertes Identifizierungsmodul (VSIM) nach einer ersten Personalisierung auch mehrmals umpersonalisiert werden, entweder über die gleiche ursprüngliche MasterSIM (MSIM) mit gleichen oder geänderten Datensatz oder auch über eine andere MasterSIM (MSIM).

Bevorzugt können auch nur Teile des Datensatzes auf den personalisierten Identifizierungsmodulen (VSIM) geändert werden, insbesondere dass nur die Teilnehmeridentifikationen (IMSI) geändert wird.

Der Datensatz kann dabei über eine Funkverbindung (zum Beispiel OTA Over-The-Air) oder sonstige Verbindung zu einer das zweite SIM aufnehmende Lese-/Schreibvorrichtung übertragen werden oder alternativ kann dieser Datensatz innerhalb eines sowohl das MasterSIM als auch das zweite SIM aufnehmenden Lese-/Schreibvorrichtung übertragen werden.

Zur Absicherung des Verfahrens wird vorzugsweise vor der Durchführung der Personalisierung und der Übertragung des Datensatzes / Teilnehmerdatensatzes vom MasterSIM, eine Überprüfung und / oder Authentifizierung der Seriennummer des zweiten SIM und / oder des Mobilfunkendgerätes anhand der Geräteidentitätsnummer (IMEI) über die das Mobilfunkendgerät eindeutig identifizierbar ist und / oder eine Überprüfung von Sicherheitsparametern des zweiten SIM durchgeführt.

Hierdurch kann gewährleistet werden, dass nur jene noch nicht personalisierten Identifizierungsmodule / Teilnehmeridentifizierungsmodule SIM personalisiert werden, die hierzu vorgesehen sind um einem Missbrauch vorzubeugen.

Des Weiteren kann alternativ oder kumulativ zur Sicherung des Verfahrens vor der Durchführung der Personalisierung und der Übertragung des Datensatzes / Teilnehmerdatensatzes vom MasterSIM, eine Überprüfung und / oder Authentifizierung des MasterSIM selbst durchgeführt werden.

Hierdurch kann die Sicherheit des Verfahrens weiter erhöht werden, d.h. dass es insbesondere nicht möglich ist, von jeder beliebigen SIM, d.h. beispielsweise von jedem beliebigen Teilnehmeridentifizierungsmodul für ein Mobilfunknetz quasi eine Kopie zu erstellen, sondern dass dies tatsächlich den so genannten MasterSIMs vorbehalten ist.

Es ist somit vorzugsweise ausgeschlossen von jedem Identifizierungsmodul / Teilnehmeridentifizierungsmodul SIM quasi eine Kopie zu erstellen. Mit Kopie ist in diesem Zusammenhang gemeint, dass mehrere Identifizierungsmodule / Teilnehmeridentifizierungsmodule SIM zwar eine jeweilige individuelle Seriennummer (ICCID) aufweisen, jedoch ansonsten einen identischen Datensatz / Teilnehmerdatensatz zur Identifizierung des Teilnehmers des Mobilfunknetzes aufweisen.

Durch die Einführung einer MasterSIM im Sinne der Erfindung, die dazu benutzt wird, weitere Identifizierungsmodule / Teilnehmeridentifizierungsmodule SIM zu personalisieren, wird somit einerseits eine MasterSIM einer Elterngeneration bereitgestellt, mittels derer eine Mehrzahl direkter Abkömmlinge einer Kindergeneration erzeugt werden kann, jedoch vorzugsweise es ausgeschlossen ist, Teilnehmeridentifizierungsmodule einer Enkelgeneration zu erzeugen, da dies jeweils ausschließlich unter Nutzung des MasterSIM, nicht jedoch unter Nutzung einer beliebigen SIM und damit auch eines Abkömmlings des MasterSIM möglich ist. Hierdurch kann ein sehr sicheres Verfahren zur Personalisierung weiterer Teilnehmeridentifizierungsmodule SIM bereitgestellt werden. In dieser Ausgestaltung ist es also lediglich unter Verwendung eines MasterSIM möglich, ein zweites SIM zu personalisieren, nicht jedoch mittels eines beliebigen SIM, wie insbesondere einem Abkömmling des MasterSIM.

Vorzugsweise wird die Seriennummer des zweiten SIM im MasterSIM gespeichert, d.h. dass vorzugsweise jeweils im MasterSIM eine vollständige Datenbank aller durchgeführten Personalisierungen und Seriennummern der Abkömmlinge gespeichert werden. Vorzugsweise wird alternativ oder kumulativ das Datum einer durchgeführten Personalisierung eines jeden weiteren Teilnehmeridentifizierungsmoduls SIM im MasterSIM gespeichert.

Vorzugsweise wird der bei der Personalisierung generierte Datensatz / Teilnehmerdatensatz und die zugehörigen Nutzerdaten oder Teilnehmerdaten, insbesondere die Seriennummer (ICCID) des zweiten SIM, im Heimatregister (HLR Home Location Register) des Mobilfunknetzes gespeichert. Hierdurch ist eine eindeutige Zuordnung der Teilnehmerdaten zu dem jeweiligen Nutzer des Mobilfunknetzes gewährleistet.

Vorzugsweise erfolgt die Übertragung der Seriennummer (ICCID) des zweiten SIM über das MasterSIM zu einem Heimatregister (HLR Home Location Register) des Mobilfunknetzes, wobei die Seriennummer der zweiten SIM dann dort gespeichert werden kann. Wenn die Seriennummer des zweiten SIM ausschließlich über das MasterSIM zu dem HLR übertragen wird, ist gewährleistet, dass tatsächlich nur eine Personalisierung weiterer SIMs über das MasterSIM möglich ist, da ansonsten ein Anmelden eines weiteren SIM in dem Heimatregister HLR des Mobilfunknetzes ausgeschlossen wird. Hierdurch wird eine weitere Erhöhung der Sicherheit des Verfahrens erzielt und einem Missbrauch vorgebeugt.

Vorzugsweise erfolgt die Datenübertragung eines Datensatzes / Teilnehmerdatensatzes vom MasterSIM zu dem zweiten SIM über eine abgesicherte Datenverbindung, insbesondere kann die Datenübertragung verschlüsselt erfolgen.

Vorzugsweise wird nach erfolgtem Empfang und der Abspeicherung des Datensatzes / Teilnehmerdatensatzes auf dem zweiten SIM eine Bestätigung an das MasterSIM und/oder an das Mobilfunknetz, insbesondere an das Heimatregister HLR des Mobilfunknetzes übermittelt.

Zur Inbetriebnahme und Personalisierung eins nicht personalisierten Identifizierungsmoduls / Teilnehmeridentifizierungsmoduls SIM muss der Benutzer, d.h. beispielsweise der Teilnehmer in einem Mobilfunknetz, somit lediglich ein einziges Mal eine MasterSIM (MSIM) erwerben, wobei die MasterSIM eine eindeutige Identifizierung / Teilnehmeridentifizierung mit einem personalisiertem Datensatz / Teilnehmerdatensatz enthält und des weiteren zu einer Vervielfachung entsprechende Authentifizierungsparameter aufweist. Diese eindeutige MasterSIM (MSIM) kann dann als Vorlage für eine Vervielfältigung für alle zukünftigen Authentifizierungen und Personalisierungen von weiteren Identifizierungsmodulen / Teilnehmeridentifizierungsmodulen SIM sein, unabhängig davon ob es sich um entnehmbare SIMs als Karten oder beispielsweise fest installierte SIMs in einem Mobilfunkendgerät handelt.

In einer bevorzugten Anwendungsform des erfindungsgemäßen Verfahrens handelt es sich bei dem ersten und/oder zweiten Identifizierungsmodul um ein Benutzeridentifizierungsmodul oder um Teilnehmeridentifizierungsmodul für den Betrieb eines Mobilfunkendgerätes.

Vorzugsweise handelt es sich bei dem Datensatz um einen Teilnehmerdatensatz eines Mobilfunknutzers.

Eine mögliche Anwendung und Ausgestaltung der Erfindung wird nachfolgend anhand der Figuren erläutert. Es zeigen:
- Figur 1: das Datenübertragungsschema von einer MasterSIM MSIM zu einem Abkömmling VSIM als weitere SIM;
- Figur 2: ein Prinzipschema der Datenübertragung von einer MasterSIM MSIM über Funk zu einem Mobilfunkendgerät mit einem Abkömmling VSIM.

Dargestellt ist ein Anwendungsbeispiel der Erfindung in Bezug auf die Mobilfunktechnik, bei der Identifizierungsmodule in Form von Teilnehmeridentifizierungsmodulen für den Betrieb eines Mobilfunkendgerätes, so genannte SIM-Karten (englisch: Subscriber Identity Module, abgekürzt SIM) eingesetzt werden.

Bei der MasterSIM MSIM handelt es sich um ein erstes Teilnehmeridentifizierungsmodul MasterSIM MSIM, welches als Vorlage für alle weiteren zu personalisierenden Teilnehmeridentifizierungsmodulen VSIM des Nutzers des Mobilfunknetzes dient. Hierzu kann eine vorgegebene oder auch eine beliebige Anzahl weiterer nicht personalisierter Teilnehmeridentifizierungsmodule, d.h. virtueller SIM VSIM personalisiert werden unter Verwendung der MasterSIM MSIM.

Hierzu wird eine Anzahl neuer und unbenutzter oder auch bereits benutzter SIM-Karten oder Mobilfunkendgeräte mit integrierter SIM-Karte über beliebige Vertriebswege angeboten. Die Initialisierung und Personalisierung erfolgt dann seitens des Nutzers des Mobilfunknetzes unter Verwendung der eindeutigen MasterSIM MSIM.

Ein Missbrauch der noch nicht personalisierten virtuellen SIMs VSIMs ist dabei ausgeschlossen, da diese ohne eine zuvor durchgeführte Personalisierung nicht geeignet sind zum Betrieb eines Mobilfunkendgerätes, so dass einem Missbrauch wirksam vorgebeugt ist.

Andererseits muss die MasterSIM seitens des Nutzers nicht benutzt werden, sondern kann sicher gelagert werden, beispielsweise in einem Tresor oder an einem sonstigen sicheren Ort, da die MasterSIM nicht zum Betrieb eines Mobilfunkendgerätes benutzt werden muss, sondern lediglich zur Personalisierung weiterer Teilnehmeridentifizierungsmodule, d.h. virtueller SIMs VSIMs benötigt wird. Einem Verlust und möglichem Missbrauch der MasterSIM kann hierdurch wirksam vorgebeugt werden, da lediglich Abkömmlinge VSIM zum Betrieb von Mobilfunkendgeräten benutzt werden müssen.

Zur Inbetriebnahme und Personalisierung eines weiteren zweiten nicht personalisierten Teilnehmeridentifizierungsmoduls VSIM werden das MasterSIM MSIM und die virtuelle SIM VSIM mittels entsprechender technischer Mittel miteinander verbunden. Hierbei kann es sich um spezielles Gerät handeln, in dem beide SIM Karten eingelegt werden. Alternativ ist es auch möglich, dass eine Funkverbindung zwischen dem MasterSIM MSIM und der zur personalisierenden weiteren SIM VSIM über eine vorzugsweise abgesicherte Verbindung hergestellt wird.

Die zu initialisierende und personalisierende Karte muss vorzugsweise ein bestimmtes Zertifikat aufweisen, so dass eine Überprüfung und Autorisierung mittels der MSIM möglich ist, um einem Missbrauch vorzubeugen. Dieses Zertifikat ist erforderlich, um einen sicheren Betrieb und eine sichere Durchführung des Verfahrens zu gewährleisten und um private Informationen, d.h. den Teilnehmerdatensatz des MasterSIMs MSIM vor der Übertragung des Teilnehmerdatensatzes vom MasterSIM MSIM zum Abkömmling VSIM zu gewährleisten und einem Missbrauch vorzubeugen. Hierzu wir eine Initialisierungsroutine durchgeführt, bevor die Daten aus dem MasterSIM MSIM ausgelesen und zum Abkömmling VSIM übertragen werden, indem eine Überprüfung und Authentifizierung des zu personalisierenden zweiten SIM durchgeführt wird und des weiteren andererseits eine Authentifizierung des MasterSIM durchgeführt wird.

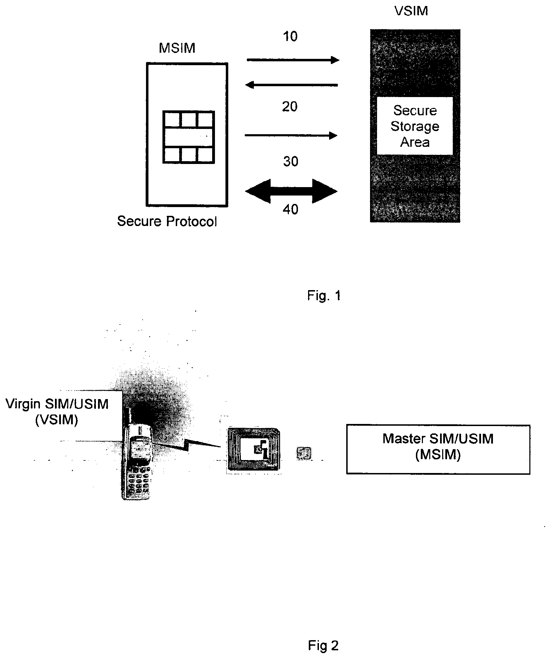

Es ist auch möglich die Seriennummer des Mobilfunkendgerätes welches den Abkömmling VSIM aufnimmt durchzuführen, wie dies schematisch in den Figuren 1 und 2 dargestellt ist.

Auch ist es möglich zu überprüfen ob die zu initialisierende und personalisierende Chipkarte VSIM bereits in Benutzung war oder ob diese SIM Karte neu ist.

Auch hierdurch kann einem Missbrauch vorgebeugt werden.

Wie in Figur 1 dargestellt wird eine abgesicherte Anfrage 10 vom MasterSIM MSIM an das zu initialisierende Teilnehmeridentifizierungsmodul VSIM gerichtet. Daraufhin wird die Seriennummer der VSIM 20 zurück übertragen an das MasterSIM MSIM. Nach erfolgreicher Authentifizierung und Identifizierung der VSIM durch Überprüfung der Seriennummer 20 werden anschließend die Teilnehmerdaten 30 vom MasterSIM MSIM an das VSIM übertragen und auf diesem gespeichert im Speicherchip 5. Die Kommunikation 40 zwischen MasterSIM MSIM und zu initialisierenden und personalisierenden VSIM erfolgt über eine abgesicherte Verbindung.

Wie in Figur 2 schematisch dargestellt ist es auch möglich, dass eine Kommunikation über eine abgesicherte Funkverbindung zu einem Mobilfunkendgerät, welches das zu initialisierende SIM VSIM enthält, aufzubauen. Auch hierbei handelt es sich um eine abgesicherte Verbindung und das Mobilfunkendgerät ist entsprechend geeignet und dahingehend ausgestattet, eine SIM mit dem empfangenen individuellen Teilnehmerdatensatz zu beschreiben, d.h. den Teilnehmerdatensatz auf dem VSIM abzuspeichern.

Sofern die Initialisierungsroutine erfolgreich durchlaufen wurde und das Zertifikat als gültig identifiziert wurde, werden dementsprechend wie in den Figuren 1 und 2 schematisch dargestellt die individuellen Teilnehmerinformationen, d.h. der individuelle Teilnehmerdatensatz vom MasterSIM MSIM zu dem zu initialisierenden und personalisierenden Abkömmling VSIM übertragen und auf diesem gespeichert. Umgekehrt wird die Seriennummer des VSIM im MasterSIM MSIM abgespeichert um jederzeit die durchgeführten Initialisierungen, Inbetriebnahmen und Personalisierungen weiterer SIM mittels der MasterSIM MSIM nachvollziehen zu können.

Falls ein Abkömmling VSIM verloren geht oder zerstört wird, können die entsprechenden Daten genutzt werden, um einen solchen Abkömmling VSIM innerhalb des Netzes zur weiteren Benutzung zu sperren.

Eine erneut personalisierte VSIM erhält eine kombinierte Identifikationsnummer in Form einer Netzwerkidentifikationsnummer enthaltend einerseits die Geräteidentifikationsnummer (IMEI) sowie des weiteren einen geheimen Nummernteil, der von der MasterSIM MSIM stammt. Die Seriennummer der VSIM kann somit als öffentlicher Schlüssel angesehen werden, der kombiniert wird mit einem geheimen Schlüssel, der von dem MasterSIM enthalten wird.

Hierzu ist die MasterSIM vorzugsweise dahingehend ausgerüstet, dass diese eine vorprogrammiertes Feld aufweist, in dem benutze Nummern für die Personalisierung abgespeichert werden können. Diese Felder müssen geheim gehalten werden und werden nur in sicher Weise zu einem VSIM übertragen, wobei ein Lesen oder eine Detektion der Nummern unmöglich ist, da diese Nummern als geheimer Teil des VSIM-Schlüssels verwendet werden. Hierdurch ist eine eineindeutige Verwendung und Zuordnung zwischen MasterSIM MSIM und weiteren Teilnehmeridentifizierungsmodulen VSIM, die unter Verwendung der MasterSIM personalisiert wurden, möglich.

Nach erfolgreich durchgeführter Personalisierung kann das VSIM in ein Mobilfunkendgerät integriert werden und die Benutzung dieses Mobilfunkendgerätes ist sodann unter Verwendung der personalisierten VSIM möglich, d.h. dass die Identifizierung des Teilnehmers durch die VSIM und deren Identität in Form der Seriennummer der VSIM sowie des Teilnehmerdatensatzes gewährleistet ist.

Es ist somit möglich, unter Verwendung der MasterSIM MSIM eine Mehrzahl von Abkömmlingen VSIMs herzustellen und somit eine Mehrzahl von Mobilfunkendgeräten auch mit identischer Teilnehmeridentifikation zu benutzen.

## Patentansprüche

1. Verfahren zur Inbetriebnahme und Personalisierung eines nicht personalisierten zweiten Identifizierungsmoduls (VSIM) für den Betrieb eines Mobilfunkendgerätes in einem Mobilfunknetz unter Verwendung eines ersten Identifizierungsmoduls (MSIM) enthaltend einen personalisierten Datensatz mit einer oder mehreren eindeutigen endgültigen Teilnehmeridentifikation(en) (IMSI), bei dem eine Authentifizierung und/oder Überprüfung des zweiten Identifizierungsmoduls (VSIM) durchgeführt, der Datensatz von dem ersten Identifizierungsmodul (MSIM) ausgelesen, und zur Personalisierung zu dem zweiten Identifizierungsmodul (VSIM) übertragen und auf diesem gespeichert wird, **dadurch gekennzeichnet, dass** der ausgelesene Datensatz und zugehörige Nutzerdaten oder Teilnehmerdaten und die Seriennummer des zweiten Identifizierungsmoduls (VSIM) in einem Heimatregister (HLR) des Mobilfunknetzes gespeichert werden.

2. Verfahren nach Anspruch 1, **dadurch gekennzeichnet, dass** das erste Identifizierungsmodul (MSIM) mehrere Teilnehmeridentifikationen (IMSI) enthält und diese zur Inbetriebnahme und Personalisierung mehrerer nicht personalisierter Identifizierungsmodule (VSIM) genutzt werden.

3. Verfahren nach Anspruch 1 oder 2, **dadurch gekennzeichnet, dass** ein ursprünglich nicht personalisiertes zweites Identifizierungsmodul (VSIM) nach einer ersten Personalisierung zwei oder mehr Male umpersonalisiert wird, entweder über das gleiche ursprüngliche erste Identifizierungsmodul (MSIM) mit gleichem oder geändertem Datensatz oder über eine anderes erstes Identifizierungsmodul (MSIM).

4. Verfahren nach Anspruch 3, **dadurch gekennzeichnet, dass** nur Teile des Datensatzes des personalisierten zweiten Identifizierungsmodulen (VSIM) geändert werden.

5. Verfahren nach einem der vorherigen Ansprüche, **dadurch gekennzeichnet, dass** der Datensatz über eine Funkverbindung (OTA) zu einer das zweite Identifizierungsmodul (VSIM) enthaltenden Lese-Schreibvorrichtung oder innerhalb eines sowohl das erste Identifizierungsmodul (MSIM) als auch das zweite Identifizierungsmodul (VSIM) aufnehmende Lese-Schreibvorrichtung übertragen wird.

6. Verfahren nach einem der vorherigen Ansprüche, **dadurch gekennzeichnet, dass** vor der Durchführung der Personalisierung und der Übertragung des Datensatzes vom ersten Identifizierungsmodul (MSIM) eine Überprüfung und/oder Authentifizierung der Seriennummer (ICCID) des zweiten Identifizierungsmoduls (VSIM) und/oder eines Mobilfunkendgerätes anhand der Geräteidentitätsnummer (IMEI), über die das Mobilfunkendgerät eindeutig identifizierbar ist, und/oder eine Überprüfung von Sicherheitsparametern des zweiten Identifizierungsmoduls (VSIM) durchgeführt wird.

7. Verfahren nach einem der vorherigen Ansprüche, **dadurch gekennzeichnet, dass** vor der Durchführung der Personalisierung und der Übertragung des Datensatzes des ersten Identifizierungsmoduls (MSIM) eine Überprüfung und/oder Authentifizierung des ersten Identifizierungsmoduls (MSIM) durchgeführt wird.

8. Verfahren nach einem der vorherigen Ansprüche, **dadurch gekennzeichnet, dass** die Seriennummer (ICCID) des zweiten Identifizierungsmoduls (VSIM) im ersten Identifizierungsmodul (MSIM) gespeichert wird.

9. Verfahren nach einem der vorherigen Ansprüche, **dadurch gekennzeichnet, dass** das Datum einer durchgeführten Personalisierung des zweiten Identifizierungsmoduls (VSIM) im ersten Identifizierungsmodul (MSIM) gespeichert wird.

10. Verfahren nach einem der vorherigen Ansprüche, **dadurch gekennzeichnet, dass** die Seriennummer (ICCID) des zweiten Identifizierungsmoduls (VSIM) über das erste Identifizierungsmodul (MSIM) zu dem Heimatregister (HLR) des Mobilfunknetzes übertragen und dort gespeichert wird.

11. Verfahren nach einem der vorherigen Ansprüche, **dadurch gekennzeichnet, dass** die Datenübertragung des Datensatzes vom ersten Identifizierungsmodul (MSIM) zu dem zweiten Identifizierungsmodul (VSIM) über eine abgesicherte Datenverbindung erfolgt.

12. Verfahren nach einem der vorherigen Ansprüche, **dadurch gekennzeichnet, dass** nach erfolgtem Empfang und der Abspeicherung des Datensatzes auf dem zweiten Identifizierungsmodul (VSIM) eine Bestätigung an das erste Identifizierungsmodul (MSIM) und/oder an das Mobilfunknetz übermittelt wird.

13. Verfahren nach einem der vorherigen Ansprüche, **dadurch gekennzeichnet, dass** es sich bei dem ersten und/oder zweiten Identifizierungsmodul (MSIM, VSIM) um ein Benutzeridentifizierungsmodul oder ein Teilnehmeridentifizierungsmodul (VSIM) für den Betrieb eines Mobilfunkendgerätes handelt.

14. Verfahren nach einem der vorherigen Ansprüche, **dadurch gekennzeichnet, dass** es sich bei dem Datensatz um einen Teilnehmerdatensatz eines Mobilfunknutzers handelt.

15. Verfahren nach Anspruch 4, **dadurch gekennzeichnet, dass** nur die Teilnehmeridentifikationen (IMSI) geändert wird.

## Claims

1. Method for activating and personalizing a non-personalized second identity module (VSIM) for operating a mobile radio terminal in a mobile radio network using a first identity module (MSIM) containing a personalized data record with one or more unique definitive subscriber identities (IMSI), in which the second identity module (VSIM) is authenticated and/or checked, the data record is read from the first identity module (MSIM) and, for personalization, is transmitted to the second identity module (VSIM) and is stored on the latter, **characterized in that** the data record which has been read and associated user data or subscriber data and the serial number of the second identity module (VSIM) are stored in a home location register (HLR) of the mobile radio network.

2. Method according to Claim 1, **characterized in that** the first identity module (MSIM) contains a plurality of subscriber identities (IMSI) and these are used to activate and personalize a plurality of non-personalized identity modules (VSIM).

3. Method according to Claim 1 or 2, **characterized in that** an originally non-personalized second identity module (VSIM) is repersonalized two or more times after a first personalization, either using the same original first identity module (MSIM) with an identical or changed data record or using a different first identity module (MSIM).

4. Method according to Claim 3, **characterized in that** only parts of the data record of the personalized second identity module (VSIM) are changed.

5. Method according to one of the preceding claims, **characterized in that** the data record is transmitted, via a radio connection (OTA), to a read/write apparatus containing the second identity module (VSIM) or within a read/write apparatus accommodating both the first identity module (MSIM) and the second identity module (VSIM).

6. Method according to one of the preceding claims, **characterized in that**, before carrying out the personalization and transmitting the data record from the first identity module (MSIM), the serial number (ICCID) of the second identity module (VSIM) and/or of a mobile radio terminal is checked and/or authenticated on the basis of the device identity number (IMEI) which can be used to uniquely identify the mobile radio terminal, and/or security parameters of the second identity module (VSIM) are checked.

7. Method according to one of the preceding claims, **characterized in that**, before carrying out the personalization and transmitting the data record of the first identity module (MSIM), the first identity module (MSIM) is checked and/or authenticated.

8. Method according to one of the preceding claims, **characterized in that** the serial number (ICCID) of the second identity module (VSIM) is stored in the first identity module (MSIM).

9. Method according to one of the preceding claims, **characterized in that** the date of a performed personalization of the second identity module (VSIM) is stored in the first identity module (MSIM).

10. Method according to one of the preceding claims, **characterized in that** the serial number (ICCID) of the second identity module (VSIM) is transmitted, via the first identity module (MSIM), to the home location register (HLR) of the mobile radio network and is stored there.

11. Method according to one of the preceding claims, **characterized in that** the data record is transmitted from the first identity module (MSIM) to the second identity module (VSIM) via a secure data connection.

12. Method according to one of the preceding claims, **characterized in that**, after the data record has been received and stored on the second identity module (VSIM), a confirmation is transmitted to the first identity module (MSIM) and/or to the mobile radio network.

13. Method according to one of the preceding claims, **characterized in that** the first and/or second identity module (MSIM, VSIM) is a user identity module or a subscriber identity module (VSIM) for operating a mobile radio terminal.

14. Method according to one of the preceding claims, **characterized in that** the data record is a subscriber data record of a mobile radio user.

15. Method according to Claim 4, **characterized in that** only the subscriber identity (IMSI) is changed.

## Revendications

1. Procédé de mise en fonctionnement et de personnalisation d'un second module d'identification (VSIM) non personnalisé pour le fonctionnement d'un terminal de téléphonie mobile dans un réseau de téléphonie mobile en utilisant un premier module d'identification (MSIM) contenant un jeu de données personnalisé associé à une ou plusieurs identification(s) d'abonnés définitives et univoques (IMSI), dans lequel une authentification et/ou une vérification du second module d'identification (VSIM) est effectuée, le jeu de données du premier module d'identification (MSIM) est lu, est transmis au second module d'identification (VSIM) et y est stocké, **caractérisé en ce que** le jeu de données lu et les données d'utilisateurs ou les données d'abonnés associées ainsi que le numéro de série du second module d'identification (VSIM) sont stockées dans un registre de localisation nominal (HLR) du réseau de téléphonie mobile.

2. Procédé selon la revendication 1, **caractérisé en ce que** le premier module d'identification (VSIM) contient plusieurs identifications d'abonnés (IMSI) et **en ce que** celles-ci sont utilisées pour mettre en fonctionnement et personnaliser plusieurs modules d'identification (VSIM) non personnalisés.

3. Procédé selon la revendication 1 ou 2, **caractérisé en ce qu'**un second module d'identification (VSIM) initialement non personnalisé est dépersonnalisé deux fois ou davantage après une première personnalisation, soit par l'intermédiaire du même premier module d'identification (MSIM) initial, avec un jeu de données identique ou modifié, soit par l'intermédiaire d'un autre premier module d'identification (MSIM).

4. Procédé selon la revendication 3, **caractérisé en ce que** seules des parties du jeu de données du second module d'identification (VSIM) personnalisé sont modifiées.

5. Procédé selon l'une quelconque des revendications précédentes, **caractérisé en ce que** le jeu de données est transmis par l'intermédiaire d'une liaison radio (OTA) à un dispositif de lecture-écriture contenant le second module d'identification (VSIM) ou à l'intérieur d'un dispositif de lecture-écriture pouvant recevoir le premier module d'identification (MSIM) ainsi que le second module d'identification (VSIM).

6. Procédé selon l'une quelconque des revendications précédentes, **caractérisé en ce qu'**avant d'effectuer la personnalisation et la transmission du jeu de données du premier module d'identification (MSIM), une vérification et/ou une authentification du numéro de série (ICCID) du second module d'identification (VSIM) et/ou d'un terminal de téléphonie mobile est effectuée sur la base du numéro d'identité d'appareil (IMEI) au moyen duquel le terminal de téléphonie mobile peut être identifié de manière univoque, et/ou une vérification de paramètres de sécurité du second module d'identification (VSIM) est effectuée.

7. Procédé selon l'une quelconque des revendications précédentes, **caractérisé en ce qu'**avant d'effectuer la personnalisation et la transmission du jeu de données du premier module d'identification (MSIM), une vérification et/ou une authentification du premier module d'identification (MSIM) est effectuée.

8. Procédé selon l'une quelconque des revendications précédentes, **caractérisé en ce que** le numéro de série (ICCID) du second module d'identification (VSIM) est stocké dans le premier module d'identification (MSIM).

9. Procédé selon l'une quelconque des revendications précédentes, **caractérisé en ce que** la date d'une personnalisation effectuée du second module d'identification (VSIM) est stockée dans le premier module d'identification (MSIM).

10. Procédé selon l'une quelconque des revendications précédentes, **caractérisé en ce que** le numéro de série (ICCID) du second module d'identification (VSIM) est transmis par l'intermédiaire du premier module d'identification (MSIM) au registre de localisation nominal (HLR) du réseau mobile et y est stocké.

11. Procédé selon l'une quelconque des revendications précédentes, **caractérisé en ce que** la transmission de données du jeu de données du premier module d'identification (MSIM) au second module d'identification (VSIM) s'effectue par l'intermédiaire d'une liaison de données sécurisée.

12. Procédé selon l'une quelconque des revendications précédentes, **caractérisé en ce qu'**après la réception réussie et le stockage du jeu de données sur le second module d'identification (VSIM), une confirmation est envoyée au premier module d'identification (MSIM) et/ou au réseau de téléphonie mobile.

13. Procédé selon l'une quelconque des revendications précédentes, **caractérisé en ce que** le premier et/ou le second module d'identification (MSIM, VSIM) est un module d'identification d'utilisateur ou un module d'identification d'abonné (VSIM) destiné au fonctionnement d'un terminal de téléphonie mobile.

14. Procédé selon l'une quelconque des revendications précédentes, **caractérisé en ce que** le jeu de données est un jeu de données d'abonné d'un utilisateur de téléphonie mobile.

15. Procédé selon la revendication 4, **caractérisé en ce que** seules les identifications d'abonnés (IMSI) sont modifiées.
